# EUROPÄISCHE PATENTANMELDUNG

(11) **EP 3 388 988 A1**
(43) Veröffentlichungstag der Anmeldung: **17.10.2018**
(21) Anmeldenummer: 18160073.5
(22) Anmeldetag: 06.03.2018
(51) Int. Cl.: G06Q 10/08, G06Q 50/30

(54) **VERFAHREN ZUM BETREIBEN EINES TRANSPORTSYSTEMS SOWIE ENTSPRECHENDES TRANSPORTSYSTEM**

(30) Priorität: 12.04.2017 DE 102017206291
(71) Anmelder: AUDI AG, 85045 Ingolstadt (DE)
(72) Erfinder: Idelevitch, Vladimir, 90441 Nürnberg (DE); Schindler, Sebastian, 85049 Ingolstadt (DE); Ertl, Maximilian, 85049 Ingolstadt (DE); Beutler, Stephan, 85049 Ingolstadt (DE)

(57) **Zusammenfassung**

Die Erfindung betrifft ein Verfahren zum Betreiben eines Transportsystems, das eine Vielzahl von Transportmitteln aufweist. Die Erfindung betrifft weiterhin ein entsprechendes Transportsystem.

## Beschreibung

Die Erfindung betrifft ein Verfahren zum Betreiben eines Transportsystems, das eine Vielzahl von Transportmitteln aufweist. Die Erfindung betrifft weiterhin ein entsprechendes Transportsystem.

Seit geraumer Zeit ist es zu beobachten, dass sich die Randbedingungen für Mobilität drastisch und rasch verändern. Dies gilt insbesondere für die urbane Mobilität, also die Städte betreffende Mobilität. Diese Veränderung resultiert beispielsweise aus Platzmangel, welcher insbesondere zu Stau führt, sowie aus Emissionen von herkömmlichen Kraftfahrzeugen, welche üblicherweise mit Brennstoffen beziehungsweise Kraftstoffen betrieben werden. In einigen urbanen Regionen ist bereits heute das Einfahren mit herkömmlichen Kraftfahrzeugen nicht mehr zulässig oder zumindest nur noch eingeschränkt erlaubt. Um sich an diesen Wandel der Mobilität anzupassen, sind neue Konzepte notwendig, welche insbesondere eine individuelle und nahtlose Mobilität ermöglichen.

Es ist daher Aufgabe der Erfindung, ein Verfahren zum Betreiben eines Transportsystems vorzuschlagen, welches gegenüber bekannten Verfahren Vorteile aufweist, insbesondere eine solche individuelle und nahtlose Mobilität für die Ladung, insbesondere für Ladung jeglicher Art, ermöglicht.

Dies wird erfindungsgemäß mit einem Verfahren zum Betreiben eines Transportsystems mit den Merkmalen des Anspruchs 1 erreicht. Das Transportsystem weist eine in einer Transportmittelgesamtmenge zusammengefasste Vielzahl von unabhängig voneinander bewegbaren, insbesondere emissionslosen Transportmitteln auf. Bei Auftreten einer Transportmittelanforderung an einer Zentralsteuereinheit wird von dieser in Abhängigkeit von einer zu transportierenden Ladung eine zum Durchführen des Transports hinreichende Transportmittelanzahl sowie ein oder mehrere dazugehörige Transportstartorte ermittelt und aus der Transportmittelgesamtmenge eine der Transportmittelanzahl entsprechende Anzahl an Transportmitteln ausgewählt, einer Transportmittelteilmenge zugeordnet und autonom dem oder den Transportstartorten zugeführt, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird.

Das Transportsystem dient dem Transport der Ladung. Die Ladung kann grundsätzlich beliebig sein und sich nach den Anforderungen an das Transportsystem richten. Beispielsweise liegt die Ladung in Form eines Transportguts und/oder wenigstens eines Lebewesens vor, wobei unter letzterem wenigstens eine Person und/oder wenigstens ein Tier zu verstehen ist. Dient das Transportsystem dem Transportieren des Transportguts gegen Entgelt, so kann das Transportgut auch als Frachtgut bezeichnet werden. Das Transportgut selbst beziehungsweise das Frachtgut kann ebenfalls in beliebiger Form vorliegen, beispielsweise als Containergut, Flüssiggut, Greifergut, Massengut, Sauggut, Schüttgut oder Stückgut.

Das Transportsystem beziehungsweise das Transportmittel ist an die Ladung beziehungsweise das Transportgut angepasst beziehungsweise zumindest anpassbar. Im Falle des Containerguts bedeutet dies beispielsweise, dass das Transportmittel zum Transportieren eines das Containergut aufnehmenden Containers ausgebildet ist. Liegt die Ladung in Form des wenigstens einen Lebewesens vor, so weist das Transportsystem beziehungsweise das Transportmittel beispielsweise eine entsprechende Transportkabine auf beziehungsweise ist um eine solche ergänzbar. Die Transportkabine liegt beispielsweise in Form einer Fahrgastkabine vor. Alternativ zu der bevorzugt geschlossenen Transportkabine kann selbstverständlich ein offener Beförderungsplatz vorgesehen sein, also beispielsweise ein Sitzplatz. In letzterem Fall ist dem Transportmittel bevorzugt ein Sitz zugeordnet beziehungsweise mit ihm verbunden.

Das Transportsystem weist die Vielzahl von Transportmitteln auf. Die Transportmittel können grundsätzlich untereinander verschieden sein oder zumindest teilweise oder insgesamt identisch aufgebaut sein. Jedes der Transportmittel ist unabhängig von jedem anderen der Transportmittel bewegbar. Das bedeutet bevorzugt, dass jedes der Transportmittel völlig autonom betreibbar ist, also beispielsweise autonom und automatisch den ihm zugewiesenen Transportstartort und/oder Transportzielort anfährt beziehungsweise anfahren kann. Hierzu sind die Transportmittel entsprechend ausgestaltet, weisen also zum Beispiel Mittel zur Durchführung eines autonomen beziehungsweise selbstständigen Fahrbetriebs auf. Diese Mittel können insbesondere eine Navigationseinrichtung, eine Routenfindungseinrichtung, eine Umfelderkennungseinrichtung oder dergleichen umfassen.

Die Transportmittel sind bevorzugt emissionslos, erzeugen bei ihrem Betrieb also keine oder nahezu keine Abgase. Dies wird beispielsweise durch einen rein elektrischen Antrieb der Transportmittel gewährleistet. Bevorzugt verfügt insoweit jedes der Transportmittel über wenigstens eine elektrische Maschine zu seinem Antrieb sowie einen entsprechenden Energiespeicher für die zum Betreiben des Antriebs benötigte elektrische Energie. Zusätzliche Anforderungen an das beziehungsweise die Transportmittel können sich aus gegebenenfalls einzuhaltenden Sicherheitsbestimmungen des Betriebsorts ergeben, insbesondere falls die Transportmittel auf öffentlichem Gebiet, bevorzugt öffentlichen Straßen, betreibbar sind sollen.

Es ist nun vorgesehen, dass die Transportmittel des Transportsystems in der Transportmittelgesamtmenge zusammengefasst sind. Die Transportmittelgesamtmenge ist insoweit eine logische Zusammenfassung aller Transportmittel des Transportsystems, unabhängig davon, wo sich diese momentan befinden. Die in der Transportmittelgesamtmenge enthaltenen Transportmittel können zumindest unabhängig voneinander jeweils an unterschiedlichen Orten, zumindest teilweise an wenigstens einem Ort oder mehreren Orten oder alle an dem gleichen Ort vorliegen, beispielsweise einem gemeinsamen Startort. In jedem Fall stellen die Transportmittel, auch wenn sie über ein weites Gebiet verteilt sind, jedoch einen Bestandteil der Transportmittelgesamtmenge dar.

Trifft an der Zentralsteuereinheit die Transportmittelanforderung an, welche beispielsweise durch eine Bedienperson und/oder durch eine Assistenzeinrichtung ausgelöst wird, so wird die Transportmittelteilmenge erstellt, nämlich aus Transportmitteln, welche in der Transportmittelgesamtmenge enthalten sind. Das Zusammenstellen der Transportmittelteilmenge erfolgt, indem zunächst die zu transportierende Ladung ausgewertet beziehungsweise analysiert wird und die zum Durchführen des Transports der Ladung hinreichende Transportmittelanzahl ermittelt wird. Aus der Transportmittelgesamtmenge wird nun eine der Transportmittelanzahl entsprechende Anzahl an Transportmitteln ausgewählt und der Transportmittelteilmenge zugeordnet.

Bevorzugt werden bei dem Auswählen und/oder Zuordnen Betriebsparameter beziehungsweise Zustandsparameter der Transportmittel berücksichtigt, insbesondere ein momentaner Standort der Transportmittel, eine verfügbare Reichweite und dergleichen. Auch eine Eignung des jeweiligen Transportmittels zum Transportieren der Ladung kann ausgewertet werden. Hierzu wird beispielsweise wenigstens ein Ladungsparameter, wie der Typ beziehungsweise die Art der Ladung, das Gewicht der Ladung und/oder eine vorhandene Transporteinrichtung für die Ladung, also beispielsweise die Transportkabine oder dergleichen, berücksichtigt.

Besonderes bevorzugt wird eine Verfügbarkeit der Transportmittel beziehungsweise des jeweiligen Transportmittels berücksichtigt. Das bedeutet, dass bereits einer anderen Transportmittelteilmenge zugeordnete Transportmittel nicht ausgewählt und der Transportmittelteilmenge zugeordnet werden, weil sie derzeit nicht verfügbar sind. Umgekehrt bedeutet dies, dass das der Transportmittelteilmenge zugeordnete Transportmittel als nicht verfügbar gekennzeichnet werden und keiner anderen Transportmittelteilmenge zugeordnet werden, solange dies der Fall ist, sie also der Transportteilmenge zugeordnet sind. Erst bei oder nach dem Auflösen der Transportmittelteilmenge werden die bislang in der Transportmittelteilmenge enthaltenen Transportmittel erneut als verfügbar gekennzeichnet und können entsprechend der anderen Transportmittelteilmenge zugeordnet werden.

Bevorzugt erhält die Zentralsteuereinheit zusammen mit der Transportmittelanforderung die Information, welche Ladung zu transportieren ist und/oder Kenngrößen dieser Ladung, also beispielsweise die Art beziehungsweise der Typ, das Volumen, das Gewicht beziehungsweise die Masse, eine Personenanzahl oder dergleichen. Aus diesen Informationen kann die Zentralsteuereinheit die zum Durchführen des Transports hinreichende Transportmittelanzahl ermitteln und die geeigneten Transportmittel auswählen.

Zusätzlich zu der Transportmittelanzahl werden der Transportstartort oder die mehreren Transportstartorte ermittelt. Beispielsweise entsprechen sich die Transportstartorte aller der Transportmittelteilmenge zugeordneten Transportmittel. Es kann jedoch auch vorgesehen sein, dass für einige der in der Transportmittelteilmenge enthaltenen Transportmittel oder alle dieser Transportmittel unterschiedliche Transportstartorte vorliegen. Der Transportstartort und/oder die Transportstartorte sind bevorzugt ebenfalls Bestandteile der Transportmittelanforderung beziehungsweise werden gemeinsam mit dieser an die Zentralsteuereinheit übermittelt. Der Transportstartort beziehungsweise die Transportstartorte werden insoweit zum Beispiel von der Bedienperson und/oder der Assistenzeinrichtung vorgegeben.

Nach dem Zuordnen der Transportmittel zu der Transportmittelteilmenge werden die Transportmittel autonom ihrem jeweiligen Transportstartort zugeführt. Jedem der Transportmittel wird also der ihn betreffende Transportstartort übermittelt, woraufhin das Transportmittel diesen autonom ansteuert. Hierbei kann es vorkommen, dass die Transportmittel zunächst an völlig unterschiedlichen Standorten vorliegen und nachfolgend demselben oder unterschiedlichen Transportstartorten zugeführt werden.

Das Zuführen erfolgt autonom, also ohne Einfluss der Bedienperson und/oder der Assistenzeinrichtung, welche die Transportmittelanforderung ausgelöst hat. Vielmehr übernimmt bevorzugt jedes der Transportmittel selbst seine Routenplanung, welche es von seinem momentanen Standort zu dem Transportstartort führt. Die Routenplanung kann jedoch auch von der Zentralsteuereinheit übernommen werden und beispielsweise vor dem Beginn des Zuführens oder bei dem Beginn des Zuführens dem jeweiligen Transportmittel übermittelt werden. Jedes der Transportmittel ist für einen vollständig autonomen Transportbetrieb beziehungsweise Fahrbetrieb ausgerüstet. Insbesondere verfügt jedes der Transportmittel insoweit über eine entsprechende Sensoreinrichtung, insbesondere eine Umfelderkennungseinrichtung, die vorzugsweise wenigstens einen Umfeldsensor aufweist, oder dergleichen.

Haben die in der Transportmittelteilmenge vorliegenden Transportmittel ihren jeweiligen Transportstartort erreicht, so wird die zu transportierende Ladung aufgenommen und der Transport der Ladung zu dem Transportzielort oder den mehreren Transportzielorten durchgeführt. Beispielsweise ist es also vorgesehen, dass mehrere der Transportmittel gemeinsam die Ladung zu einem gemeinsamen Transportzielort transportieren. Es kann jedoch auch vorgesehen sein, dass die Transportmittel unabhängig voneinander an unterschiedlichen Transportstartorten jeweils einen Teil der Ladung aufnehmen und zu unterschiedlichen Transportzielorten oder demselben Transportzielort transportieren. Beliebige Variationen sind selbstverständlich ebenfalls realisierbar. Von Bedeutung ist jedoch stets, dass die Transportmittel der Transportmittelteilmenge zugeordnet sind, also einander logisch zugeordnet sind, insbesondere in der Zentralsteuereinheit beziehungsweise einem Speicher der Zentralsteuereinheit.

Nach dem Erreichen des Transportzielorts oder der Transportzielorte durch das Transportmittel beziehungsweise die Transportmittel wird die Ladung vorzugsweise abgesetzt und anschließend die Transportmittelteilmenge aufgelöst. Das bedeutet schlussendlich, dass die in der Transportmittelteilmenge bislang enthaltenen Transportmittel wieder als verfügbar gekennzeichnet werden, sodass sie erneut von der Zentralsteuereinheit zu einer Transportmittelteilmenge zugeordnet werden können. Das Kennzeichnen der Transportmittel als verfügbar erfolgt wiederum bevorzugt in der Zentralsteuereinheit beziehungsweise deren Speicher, sodass die Verfügbarkeit der einzelnen Transportmittel zentral vorgehalten wird und bei Bedarf überprüft werden kann.

Eine derartige Vorgehensweise ermöglicht ein äußerst flexibles Betreiben des Transportsystems, insbesondere die vorstehend bereits erwähnte individuelle und nahtlose Mobilität. Dies rührt insbesondere von der Modularität des Transportsystems her, dessen Transportmittel beliebig zusammengefasst und zum Transportieren der Ladung herangezogen werden können.

Beispielsweise ist es also vorgesehen, dass mehrere Transportmittel der Transportmittelteilmenge zugeordnet werden und von demselben Startort oder von unterschiedlichen Startorten demselben Transportstartort zugeführt werden. An diesem Transportstartort nehmen die Transportmittel gemeinsam die Ladung auf und transportieren sie ebenfalls gemeinsam zu dem Transportzielort. An diesem wird die Ladung abgesetzt und die Transportmittelteilmenge wieder aufgelöst. Stets wird hierbei bei Auftreten der Transportmittelanforderung an der Zentralsteuereinheit die zum Durchführen des Transports hinreichende Transportmittelanzahl ermittelt und diese Anzahl an Transportmitteln dem Transportstartort beziehungsweise den Transportstartorten zugeführt.

Soweit im Rahmen dieser Beschreibung von dem oder den Transportstartorten beziehungsweise dem oder den Transportzielorten die Rede ist, so ist bevorzugt lediglich genau ein Transportstartort und/oder lediglich genau ein Transportzielort gemeint. Umfasst ist jedoch grundsätzlich auch eine Vorgehensweise, bei welcher die Transportmittel mehreren unterschiedlichen Transportstartorten zugeführt werden und nachfolgend zu einem gemeinsamen Transportzielort verlagert werden oder bei welcher die Transportmittel einem gemeinsamen Transportstartort zugeführt und anschließend unterschiedlichen Transportzielorten zugeführt werden. Es kann auch vorgesehen sein, dass die Transportmittel zunächst unterschiedlichen Transportstartorten und anschließend unterschiedlichen Transportzielorten zugeführt werden.

Das Transportsystem findet beispielsweise auf einem Flughafen oder im Einzelhandel, insbesondere in einem Ladengeschäft oder einem Einkaufszentrum mit mehreren Ladengeschäften, Anwendung. Bei Verwendung auf dem Flughafen kann das Transportsystem beispielsweise zum Transportieren von Gepäck und/oder Personen ausgelegt sein. Besonders bevorzugt wird das Gepäck mittels wenigstens eines Transportmittels und ein Eigentümer des Gepäcks von wenigstens einem weiteren Transportmittel jeweils von einem Transportstartort zu einem Transportzielort befördert. Das Transportmittel und das weitere Transportmittel sind hierbei derselben Transportmittelteilmenge zugeordnet. Bevorzugt werden dem Transportmittel und dem weiteren Transportmittel derselbe Transportstartort oder zumindest derselbe Transportzielort zugewiesen.

Beispielsweise dienen die Transportmittel dem Aufnehmen des Gepäcks und seines Eigentümers an einem gemeinsamen Transportstartort, beispielsweise einem Parkplatz. Nach dem Aufnehmen des Gepäcks und des Eigentümers werden diese auf üblicherweise wenigstens teilweise separaten Wegen zu separaten Transportzielorten transportiert, insbesondere einer Gepäckabfertigung für das Gepäck und einer Personenabfertigung für den Eigentümer.

Ist das Transportsystem für den Einzelhandel ausgestaltet, so dient es vorzugsweise dem Transport von Einkäufen, die ein Benutzer des Transportsystems erworben hat. Hierzu können ein Transportmittel oder mehrere Transportmittel Verwendung finden.

Im Rahmen einer weiteren Ausgestaltung der Erfindung ist vorgesehen, dass die Transportmittelanforderung die zu transportierende Ladung, den oder die Transportstartorte sowie den oder die Transportzielorte spezifiziert. Hierauf wurde vorstehend bereits hingewiesen. Damit die Zentralsteuerung die hinreichende beziehungsweise notwendige Transportmittelanzahl ermitteln kann, muss die zu transportierende Ladung angegeben werden. Hierzu werden beispielsweise zusammen mit der Transportmittelanforderung die entsprechenden Informationen übermittelt. Dies gilt analog für den beziehungsweise die Transportstartorte sowie den beziehungsweise die Transportzielorte.

Eine bevorzugte Weiterbildung der Erfindung sieht vor, dass die Transportmittel für die Transportmittelteilmenge anhand einer zum Erreichen des oder der Transportstartorte oder des oder der Transportzielorte benötigten Energiemenge und/oder einer jeweils verbleibenden Restenergiemenge der Transportmittel ausgewählt werden. Die Transportmittel werden insoweit nur dann der Transportmittelteilmenge zugeordnet, wenn die Energiemenge, welche zum Erreichen erst des Transportstartorts und anschließend des Transportzielorts benötigte Energiemenge kleiner ist als die verbleibende Restenergiemenge des jeweiligen Transportmittels.

Die Restenergiemenge beschreibt die verbleibende Reichweite des beziehungsweise der Transportmittel, also die Strecke, welche noch von diesem/diesen zurückgelegt werden kann. Bei der Ermittlung der benötigten Energiemenge kann beispielsweise eine Topologie der zu befahrenden Strecke zwischen dem Transportstartort und dem Transportzielort herangezogen werden, also beispielsweise Steigungen und/oder Gefälle auf dieser Strecke. Auch die momentane Verkehrslage kann in die Bestimmung der benötigten Energiemenge einfließen. Die nach Ankunft des Transportmittels an dem Transportzielort verbleibende Restenergiemenge kann grundsätzlich gleich oder zumindest nahezu Null sein. In diesem Fall ist es bevorzugt vorgesehen, das Transportmittel unmittelbar am Transportzielort aufzuladen oder von diesem abzuholen.

Eine Weiterbildung der Erfindung sieht vor, dass bei dem Auswählen der Transportmittel zusätzlich eine Entfernung des oder der Transportzielorte von einer Wartungs- und/oder Ladeeinrichtung für die Transportmittel berücksichtigt wird. Das Transportsystem umfasst die wenigstens eine Wartungs- und/oder Ladeeinrichtung. An dieser können Wartungsarbeiten an den Transportmitteln durchgeführt werden, beispielsweise notwendige Reparaturen. Zusätzlich oder alternativ kann es vorgesehen sein, den Energiespeicher der Transportmittel aufzuladen. An der Wartungs- und/oder Ladeeinrichtung wird insoweit elektrische Energie zum Aufladen des Energiespeichers bereitgestellt.

Bei der Auswahl der Transportmittel wird nun zusätzlich berücksichtigt, ob diese nach Ankunft an dem Transportzielort, also nach dem Durchführen des Transports, über eine Restenergiemenge verfügen, welche ausreichend groß ist, um anschließend die Wartungs- und/oder Ladeeinrichtung erfolgreich anzufahren, diese also zu erreichen. Nur wenn dies der Fall ist, wird das Transportmittel der Transportmittelteilmenge zugeordnet. Anderenfalls wird ein anderes Transportmittel aus der Transportmittelgesamtmenge ausgewählt und der Transportmittelteilmenge zugeordnet.

Alternativ oder ergänzend kann der Energiezustand der Transportmittelteilmenge betrachtet werden. Dabei denkbar, dass die einzelnen Transportmittel jeweils über voneinander verschiedene Restenergiemengen verfügen. Falls also Transportmittel jeweils nicht über eine ausreichende Restenergiemenge verfügen, um den geplanten Transport durchzuführen, aber die gesamte Restenergiemenge aller Transportmittel, also die Transportmittelteilmenge-Restenergiemenge ausreichend ist, so sind die Transportmittel in der Lage, untereinander einen Energietausch durchzuführen. So kann beispielsweise ein Transportmittel mit ausreichender bzw. höherer Restenergiemenge ein Transportmittel mit nicht mehr ausreichender Restenergiemenge laden. Gleichermaßen ist eine Energieaustausch mit der Ladung, vorzugsweise mit dem zu transportierenden Fahrzeug, möglich. Selbstverständlich kann in jedem Fall ebenso in umgekehrter Richtung geladen werden.

Eine weitere bevorzugte Ausführungsform der Erfindung sieht vor, dass eine Ankunftszeit der ausgewählten Transportmittel an dem oder den Transportstartorten berechnet und angezeigt wird. Nach dem Eingehen der Transportmittelanforderung an der Zentralsteuereinheit wird insoweit die Ankunftszeit als Information bereitgestellt und beispielsweise der Bedienperson angezeigt oder ihr beziehungsweise der Assistenzeinrichtung übermittelt. Zusätzlich kann es vorgesehen sein, die momentanen Standorte der in der Transportmittelteilmenge enthaltenen Transportmittel der Bedienperson und/oder der Assistenzeinrichtung anzuzeigen oder zu übermitteln.

Im Rahmen einer weiteren Ausgestaltung der Erfindung ist vorgesehen, dass vor dem Zuführen der ausgewählten Transportmittel zu dem oder den Transportstartorten eine Bestätigungsanfrage durchgeführt wird, wobei die Transportmittel bei auf die Bestätigungsanfrage folgender Bestätigung dem oder den Transportstartorten zugeführt werden und ansonsten die Transportmittelteilmenge aufgelöst wird. Zunächst wird also die Transportmittelanzahl ermittelt und die Transportmittelteilmenge zusammengestellt.

Anschließend werden Informationen, die die Transportmittelanzahl und/oder die Transportmittelteilmenge betreffen, von der Zentralsteuereinheit bereitgestellt, beispielsweise der Bedienperson angezeigt oder an diese übermittelt. Diese Informationen können beispielsweise die Ankunftszeit der ausgewählten Transportmittel, Kosten für die Durchführung des Transports oder dergleichen umfassen. Vorzugsweise in diesem Rahmen wird die Bestätigungsanfrage durchgeführt, welche an der Zentralsteuereinheit bestätigt werden muss.

Erfolgt diese Bestätigung, so werden die Transportmittel dem oder den Transportstartorten zugeführt. Unterbleibt ansonsten die Bestätigung oder erfolgt eine aktive Stornierung an der Zentralsteuereinheit, so wird das Zuführen der Transportmittel zu dem oder den Transportstartorten abgebrochen oder erst gar nicht eingeleitet und zudem die Transportmittelteilmenge aufgelöst, nämlich bevorzugt in der Zentralsteuereinheit beziehungsweise deren Speicher.

Im Rahmen einer weiteren Ausgestaltung der Erfindung ist vorgesehen, dass die in der Transportmittelteilmenge enthaltenen Transportmittel die Ladung gemeinsam aufnehmen und/oder anheben. Dies ist insbesondere der Fall, falls die Transportmittel demselben Transportstartort zugeführt werden, also die aufzunehmende Ladung an dem Transportstartort vollständig vorliegt oder zumindest der aufzunehmende Teil dort vorliegt. In Abhängigkeit von der Ladung kann es notwendig sein, mehrere Transportmittel zu verwenden, um die Ladung transportieren zu können. Die Ladung wird also von mehreren Transportmitteln gemeinsam aufgenommen. Dabei kann es vorgesehen sein, dass die Ladung von den mehreren Transportmitteln gemeinsam angehoben wird, um sie nachfolgend zu transportieren.

Eine weitere Ausgestaltung der Erfindung sieht vor, dass die die Ladung gemeinsam aufnehmenden und/oder anhebenden Transportmittel zumindest während des Transports autonom einen zwischen ihnen vorliegenden Abstand konstant halten oder miteinander gekoppelt werden, insbesondere mechanisch, magnetisch und/oder pneumatisch. Es ist insoweit vorgesehen, dass die Transportmittel die Ladung nicht nur gemeinsam aufnehmen beziehungsweise anheben, sondern zudem auch gemeinsam den Transport der Ladung von dem Transportstartort zu dem Transportzielort durchführen.

Während des Transports sollen die Transportmittel den zwischen ihnen vorliegenden Abstand autonom konstant halten, wobei sie bevorzugt beabstandet voneinander vorliegen, also nicht unmittelbar miteinander verbunden sind. Eine Verbindung zwischen den Transportmitteln ist insoweit bevorzugt ausschließlich über die Ladung und/oder den Untergrund, auf welchem die Transportmittel sich bewegen, vorgesehen. Zum Konstanthalten des Abstands sind die Transportmittel oder wenigstens eines der Transportmittel mit entsprechenden Einrichtungen versehen, zum Beispiel mit wenigstens einem Abstandssensor oder - vorteilhaft - mit mehreren Abstandssensoren, die bevorzugt zumindest teilweise unterschiedliche Ausrichtungen aufweisen. Der Abstandssensor beziehungsweise jeder der Abstandssensoren kann beispielsweise als optischer oder akustischer Abstandssensor ausgestaltet sein. Bevorzugt weist das Transportmittel Abstandssensoren unterschiedlicher Art auf, die zudem gleich ausgerichtet sind, also zum Beispiel einen optischen und einen akustischen Abstandssensor.

Zusätzlich oder alternativ kann es vorgesehen sein, dass die Transportmittel während des Transports miteinander gekoppelt sind. Hierbei ist es also vorgesehen, dass nach dem Erreichen des Transportstartorts und vor dem Aufnehmen der Ladung oder alternativ nach dem Aufnehmen der Ladung, jedoch vor dem Durchführen des Transports, die dem Transport der Ladung dienenden Transportmittel miteinander gekoppelt werden. Diese Kopplung wird bevorzugt nach dem Erreichen des Transportzielorts, insbesondere nach dem Absetzen der Ladung, beispielsweise gemeinsam mit dem Auflösen der Transportmittelteilmenge, wieder aufgelöst. Die Kopplung der Transportmittel kann beispielsweise mechanisch, magnetisch und/oder pneumatisch durchgeführt werden, wozu die Transportmittel entsprechende Einrichtungen aufweisen.

Unabhängig davon, ob die Transportmittel miteinander gekoppelt sind oder nicht und ob das Halten des Abstands zwischen ihnen autonom erfolgt, kann es vorgesehen sein, dass sich die in der Transportmittelteilmenge befindlichen Transportmittel in einer bestimmten, festgelegten Formation bewegen. Diese kann vor dem Aufnehmen der Ladung ermittelt werden, insbesondere in Abhängigkeit von der Ladung beziehungsweise von der Art der Ladung.

Eine weitere bevorzugte Ausgestaltung der Erfindung sieht vor, dass bei einem gemeinsamen Transport der Ladung mittels mehrerer Transportmittel, die in der Transportmittelteilmenge enthaltenen Transportmittel in wenigstens ein Mastertransportmittel und wenigstens ein Slavetransportmittel aufgeteilt werden. Das Mastertransportmittel übernimmt hierbei zumindest einige Funktionen des Slavetransportmittels, welches diese hierzu an das Mastertransportmittel abgibt. Beispielsweise übernimmt das Mastertransportmittel die alleinige Kommunikation mit der Zentralsteuereinheit und leitet Anweisungen der Zentralsteuereinheit an das Slavetransportmittel weiter.

In anderen Worten ist es vorgesehen, dass die Transportmittelteilmenge beziehungsweise die in ihr enthaltenen Transportmittel wenigstens teilweise, vorzugsweise vollständig, von dem wenigstens einen Mastertransportmittel gesteuert wird. Hierzu gibt das Mastertransportmittel entsprechende Anweisungen an das Slavetransportmittel, welches diese umsetzt. Umgekehrt werden keine solchen Anweisungen übertragen. Das Slavetransportmittel kann jedoch Statusmeldungen, beispielsweise über seinen Betriebszustand und/oder einer Umfeldüberwachung, an das Mastertransportmitttel übermitteln. Die Umfeldüberwachung wird hierbei vorzugsweise mittels der bereits erwähnten Umfelderkennungseinrichtung durchgeführt.

Besonders bevorzugt ist es vorgesehen, dass das Mastertransportmittel eine zu fahrende Route selbst festlegt oder von der Zentralsteuereinheit übermittelt bekommt. Das Mastertransportmittel leitet die Route an die Slavetransportmittel weiter, sodass diese die Route selbsttätig abfahren können. Alternativ kann es selbstverständlich vorgesehen sein, dass das Mastertransportmittel das Ansteuern einer Antriebseinrichtung und/oder einer Lenkeinrichtung des wenigstens einen Slavetransportmittels übernimmt, dieses also im wesentlichen fernsteuert.

Eine bevorzugte weitere Ausgestaltung der Erfindung sieht vor, dass die in der Transportmittelgesamtmenge enthaltenen Transportmittel untereinander identisch oder zumindest zum Teil voneinander verschieden ausgestaltet werden beziehungsweise sind. Es kann insoweit vorgesehen sein, dass die Transportmittel allesamt identisch sind beziehungsweise denselben Grundaufbau aufweisen. Dieser Grundaufbau kann auf eine bestimmte Art der Ladung angepasst sein. Es kann jedoch auch vorgesehen sein, dass der Grundaufbau mittels eines zusätzlichen Transportmittelaufsatzes oder dergleichen an unterschiedliche Arten von Ladungen anpassbar ist. Beispielsweise ist der Grundaufbau hierzu um einen an die Ladung angepassten Transportmittelaufsatz ergänzbar beziehungsweise mit ihm koppelbar.

Es kann jedoch auch vorgesehen sein, dass die Transportmittel von vornherein voneinander verschieden ausgestaltet sind und insoweit unterschiedliche Grundaufbauten aufweisen, die fest beziehungsweise permanent mit ihnen verbunden sind. Insoweit enthält die Transportmittelgesamtmenge beispielsweise Transportmittel, die an den Transport einer ersten Ladung angepasst sind, sowie über Transportmittel, die an den Transport einer von der ersten Ladung unterschiedlichen zweiten Ladung angepasst sind. Die beiden Ladungen, also die erste Ladung und die zweite Ladung, sind hierbei von unterschiedlichem Typ beziehungsweise unterschiedlicher Art. Beispielsweise werden als erste Ladung Lebewesen, insbesondere Personen, und als zweite Ladung ein Transportgut verwendet.

Eine Weiterbildung der Erfindung sieht vor, dass wenigstens eines der Transportmittel vor dem Zuführen zu dem entsprechenden Transportstartort mit einem Transportmittelaufsatz versehen wird. Der Transportmittelaufsatz dient dem Transportieren beziehungsweise dem Aufnehmen der Ladung. Beispielsweise wird zum Transportieren der Ladung diese vollständig in dem Transportmittelaufsatz angeordnet. Ein derartiger Transportmittelaufsatz kann beispielsweise eine Transportkabine, ein Container oder ein Tank sein. Der Transportmittelaufsatz wird mit dem vorstehend beschriebenen Grundaufbau des Transportmittels beziehungsweise der Transportmittel verbunden, insbesondere auf dieses beziehungsweise diese aufgesetzt. Es kann vorgesehen sein, dass der Transportmittelaufsatz mit genau einem der Transportmittel oder mehreren der Transportmittel verbunden wird.

Es kann im Rahmen einer bevorzugten Ausgestaltung der Erfindung vorgesehen sein, dass der Transportmittelaufsatz mit mehreren der Transportmittel gekoppelt wird. Der Transportmittelaufsatz, welcher dem Transport der Ladung dient, wird insoweit selbst von mehreren Transportmitteln transportiert. Hierzu nehmen die mehreren Transportmittel den Transportmittelaufsatz gemeinsam auf beziehungsweise heben ihn gemeinsam an. Die Ladung kann hierbei bereits vor dem Aufnehmen beziehungsweise Anheben in dem Transportmittelaufsatz angeordnet werden oder erst danach, also vor dem Durchführen des Transports.

Eine weitere Ausführungsform der Erfindung sieht vor, dass der Transportmittelaufsatz aus einer Vielzahl von unterschiedlichen Transportmittelaufsätzen ausgewählt wird. Das Transportsystem weist also nicht lediglich eine einzige Art von Transportmittelaufsätzen auf, enthält also nicht lediglich identische Transportmittelaufsätze. Vielmehr sind die Transportmittelaufsätze, welche dem Transportsystem zugeordnet sind, wenigstens teilweise unterschiedlich ausgestaltet und an den Transport unterschiedlicher Ladungen beziehungsweise unterschiedlicher Ladungstypen angepasst. Beispielsweise ist ein Teil der Transportmittelaufsätze an den Transport von Transportgütern und ein weiterer Teil an den Transport von Lebewesen, insbesondere von Personen, angepasst.

Eine weitere bevorzugte Ausgestaltung der Erfindung sieht vor, dass als Transportmittelaufsatz eine Transportkabine oder eine Kraftfahrzeughalterung verwendet wird. Auf die Verwendung der Transportkabine, beispielsweise der Fahrgastkabine, wurde vorstehend bereits hingewiesen. Die Transportkabine dient insbesondere der Aufnahme der zu transportierenden Person oder der zu transportierenden Personen.

Alternativ kann auch die Kraftfahrzeughalterung als Transportmittelaufsatz verwendet werden. Die Kraftfahrzeughalterung dient der Halterung beziehungsweise Aufnahme eines zu transportierenden Kraftfahrzeugs. Die Kraftfahrzeughalterung kann einstückig ausgebildet sein und nachfolgend von mehreren Transportmitteln aufgenommen beziehungsweise angehoben werden. Es kann jedoch auch vorgesehen sein, dass jedes Transportmittel eine separate Kraftfahrzeughalterung verwendet, sodass die Transportmittel voneinander beabstandet an dem Kraftfahrzeug angeordnet sind.

Beispielsweise wird jedem Rad des Kraftfahrzeugs ein Transportmittel zugeordnet. Entsprechend wird das Kraftfahrzeug durch Anheben seiner Räder, insbesondere gleichzeitiges Anheben oder nacheinander erfolgendes Anheben, durch die Transportmittel angehoben und kann nachfolgend transportiert werden. Bei einem typischen Personenkraftwagen sind insoweit vier Transportmittel für den Transport des Kraftfahrzeugs notwendig.

Schließlich kann im Rahmen einer weiteren Ausführungsform der Erfindung vorgesehen sein, dass die in der Transportmittelteilmenge enthaltenen Transportmittel nach dem Transport einzeln und unabhängig voneinander an wenigstens einen Transportstartort verlagert werden. Nach dem Erreichen des Transportzielorts oder der Transportzielorte durch die Transportmittel wird die Transportmittelteilmenge aufgelöst und die bislang in der Transportmittelteilmenge enthaltenen Transportmittel erneut als verfügbar gekennzeichnet. Entsprechend können sie erneut zum Transport einer Ladung herangezogen werden. Hierzu sind sie einzeln und unabhängig voneinander dem wenigstens einen weiteren Transportstartort zuführbar.

Beispielsweise werden die bislang in der Transportmittelteilmenge enthaltenen Transportmittel an unterschiedliche Transportstartorte verlagert. Es kann jedoch auch vorgesehen sein, dass sie einzeln und unabhängig voneinander dem gleichen Transportstartort zugeführt werden, wobei die bislang in der Transportmittelteilmenge enthaltenen Transportmittel Bestandteil einer neu gebildeten Transportmittelteilmenge sind.

Die Erfindung betrifft selbstverständlich auch ein Transportsystem, insbesondere zur Durchführung des Verfahrens gemäß den vorstehenden Ausführungen, wobei das Transportsystem eine in einer Transportmittelgesamtmenge zusammengefasste Vielzahl von unabhängig voneinander bewegbaren, insbesondere emissionslosen Transportmitteln aufweist und dazu ausgebildet ist, bei Auftreten einer Transportmittelanforderung an einer Zentralsteuereinheit von dieser in Abhängigkeit von einer zu transportierenden Ladung eine zum Durchführen des Transports hinreichende Transportmittelanzahl sowie ein oder mehrere zugehörige Transportstartorte zu ermitteln und aus der Transportmittelgesamtmenge eine der Transportmittelanzahl entsprechende Anzahl an Transportmitteln auszuwählen, einer Transportmittelteilmenge zuzuordnen und autonom dem oder den Transportstartorten zuzuführen, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird.

Auf die Vorteile einer derartigen Vorgehensweise beziehungsweise einer derartigen Ausgestaltung des Transportsystems wurde bereits hingewiesen. Sowohl das Transportsystem als auch das Verfahren zu seinem Betreiben können gemäß den vorstehenden Ausführungen weitergebildet sein, sodass insoweit auf diese verwiesen wird.

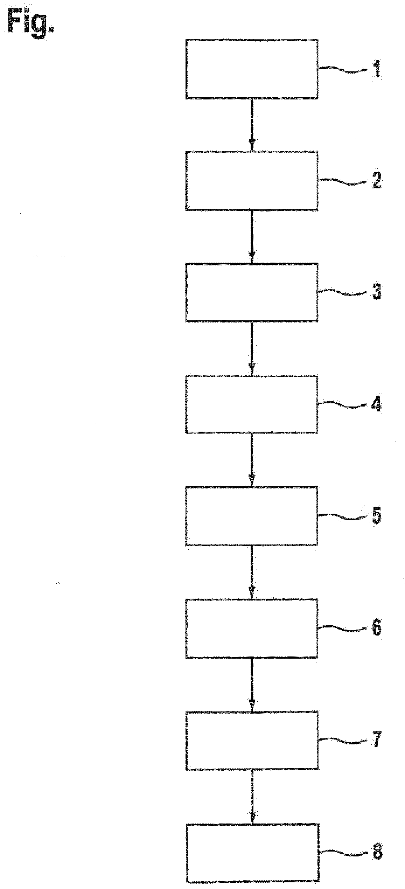

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Ablaufdiagramm eines Verfahrens zum Betreiben eines Transportsystems.

Die Figur zeigt in schematischer Form ein Ablaufdiagramm eines Verfahrens zum Betreiben eines Transportsystems, das eine in einer Transportmittelgesamtmenge zusammengefasste Vielzahl von Transportmitteln aufweist. Diese Transportmittel sind unabhängig voneinander bewegbar sowie besonders bevorzugt emissionslos. Sie liegen insoweit beispielsweise als Elektrofahrzeug oder dergleichen vor.

In einem ersten Schritt 1 tritt eine Transportmittelanforderung an einer Zentralsteuereinheit auf, beispielsweise durch eine Bedienperson beziehungsweise einen Kunden oder alternativ durch eine Assistenzeinrichtung. Mit der Transportmittelanforderung werden beispielsweise Informationen über eine zu transportierende Ladung sowie einen Transportstartort und einen Transportzielort übermittelt. Die Ladung liegt beispielsweise in Form eines Kraftfahrzeugs vor. Entsprechend können die Informationen beispielsweise Fahrzeugdaten des Kraftfahrzeugs, beispielsweise den Fahrzeugtyp, umfassen.

Aus dem Kraftfahrzeugtyp ermittelt die Zentralsteuereinheit wesentliche Daten wie das zulässige Gesamtgewicht, maximale Achslasten und/oder Abmessungen des Kraftfahrzeugs, beispielsweise unter Verwendung einer Datenbank. Es kann auch vorgesehen sein, dass die Informationen von einer Assistenzeinrichtung des Kraftfahrzeugs selbst übermittelt werden. In diesem Fall betätigt die Bedienperson lediglich die Assistenzeinrichtung des Kraftfahrzeugs, welche wiederum die Transportmittelanforderung an die Zentralsteuereinheit übermittelt.

In einem Schritt 2 ermittelt die Zentralsteuereinheit Informationen über verfügbare Transportmittel, welche in der Transportmittelgesamtmenge zusammengefasst sind. Hierbei werden beispielsweise spezifische Daten der einzelnen Transportmittel überprüft, wie beispielsweise der momentane Standort, die zum Erreichen des Transportstartorts und des Transportzielorts benötigte Energiemenge sowie die dem Transportmittel verbleibende Restenergiemenge. Zusätzlich kann ermittelt werden, ob die Restenergiemenge nach dem Durchführen des Transports zum Erreichen einer Wartungs- und/oder Ladeeinrichtung für die Transportmittel reichen würde.

Sich bereits in Verwendung befindliche Transportmittel, also insbesondere als nicht verfügbar gekennzeichnet Transportmittel, können herangezogen werden, falls sie sich zu einem bestimmten Zeitpunkt in der Nähe des Transportstartorts befinden und die weiteren Anforderungen erfüllen. Der bestimmte Zeitpunkt ist hierbei insbesondere die Ankunftszeit der anderen Transportmittel an ihren jeweiligen Transportstartorten.

In einem Schritt 3 legt die Zentralsteuereinheit in Abhängigkeit von der zu transportierenden Ladung die zum Durchführen des Transports hinreichende Transportmittelanzahl fest und stellt eine Transportmittelteilmenge zusammen, welche eine der Transportmittelanzahl entsprechende Anzahl an Transportmitteln enthält. Anschließend werden die der Transportmittelteilmenge zugeordneten Transportmittel autonom dem Transportstartort zugeführt beziehungsweise das Zuführen zumindest begonnen.

Anschließend wird in einem Schritt 4 eine Bestätigungsanfrage durchgeführt, wobei die Transportmittel bei auf die Bestätigungsanfrage folgender Bestätigung tatsächlich dem Transportstartort zugeführt werden. Bleibt die Bestätigung aus oder erfolgt eine aktive Stornierung, so wird die Transportmittelteilmenge wieder aufgelöst und die bislang in dieser enthaltenen Transportmittel anderen Verwendungen zugeführt.

Das tatsächliche Zuführen der in der Transportmittelteilmenge enthaltenen Transportmittel wird in einem Schritt 5 vorgenommen. Das bedeutet, dass im Rahmen des Schritts 5 die Transportmittel tatsächlich den Transportstartort erreichen.

In einem Schritt 6 wird nach dem Erreichen des Transportstartorts durch die Transportmittel die Ladung, also beispielsweise das Kraftfahrzeug, aufgeladen und aus den einzelnen Transportmitteln ein statischer Verband gebildet. Dieser Verband und die zwischen den Transportmitteln des Verbands vorliegenden Abstände werden beispielsweise durch eine direkte Kommunikation der Transportmittel untereinander eingestellt, insbesondere gesteuert und/oder geregelt.

In einem Schritt 7 werden die Transportmittel zum Transportieren der Ladung zu dem Transportzielort verwendet. Hierbei bewegen sie sich innerhalb des statischen beziehungsweise geschlossenen Verbands fort, dessen Abmessungen individuell, aufgrund der Abstände der Transportmittel innerhalb des Verbands, der Abmessungen der Ladung sowie der Abmessungen der Transportmittel errechnet werden. Diese Abmessungen können als Eingangsgröße für eine Navigation beziehungsweise Routenführung der Transportmittel herangezogen werden. Besonders bevorzugt verfügen die Transportmittel über eine Kommunikationseinrichtung zur Kommunikation mit dem zu transportierenden Kraftfahrzeug. Beispielsweise steuern hierbei die Transportmittel eine Signalanlage des Kraftfahrzeugs an, beispielsweise eine Fahrtrichtungsanzeigeanlage und/oder eine Bremsanzeigeanlage. Hierzu kann eine Verbindung, beispielsweise eine drahtgebundene oder eine drahtlose Verbindung, hergestellt werden.

In einem Schritt 8 kommen die Transportmittel zusammen mit der Ladung an dem Transportzielort an. Anschließend wird die Ladung abgeladen und die Transportmittelteilmenge aufgelöst. Das Abladen erfolgt bevorzugt erst dann, sobald an der Zentralsteuereinheit eine Transportbestätigung eingeht, welche beispielsweise durch die Bedienperson ausgelöst wird beziehungsweise auszulösen ist. Selbstverständlich kann es auch vorgesehen sein, dass der Schritt 8 bereits vorzeitig, also vor dem Erreichen des Transportzielorts ausgelöst wird, insbesondere indem die Bedienperson und/oder die Assistenzeinrichtung den Transport vorzeitig abbricht. In diesem Fall wird der Transport bereits vor Erreichen des Transportzielorts abgebrochen und die Ladung von den Transportmitteln abgeladen.

Das beschriebene Verfahren zum Beschreiben des Transportsystems ist äußerst flexibel einsetzbar. Zudem kann das Transportsystem sehr modular aufgebaut sein und aus gleichen oder unterschiedlichen Transportmitteln bestehen.

## Patentansprüche

1. Verfahren zum Betreiben eines Transportsystems, das eine in einer Transportmittelgesamtmenge zusammengefasste Vielzahl von unabhängig voneinander bewegbaren, insbesondere emissionslosen Transportmitteln aufweist und bei Auftreten einer Transportmittelanforderung an einer Zentralsteuereinheit von dieser in Abhängigkeit von einer zu transportierenden Ladung eine zum Durchführen des Transports hinreichende Transportmittelanzahl sowie ein oder mehrere dazugehörige Transportstartorte ermittelt werden und aus der Transportmittelgesamtmenge eine der Transportmittelanzahl entsprechende Anzahl an Transportmitteln ausgewählt, einer Transportmittelteilmenge zugeordnet und autonom dem oder den Transportstartorten zugeführt wird, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird.

2. Verfahren nach Anspruch 1, **dadurch gekennzeichnet, dass** die Transportmittelanforderung die zu transportierende Ladung, den oder die Transportstartorte sowie den oder die Transportzielorte spezifiziert.

3. Verfahren nach einem der vorhergehenden Ansprüche, **dadurch gekennzeichnet, dass** die Transportmittel für die Transportmittelteilmenge anhand einer zum Erreichen des oder der Transportstartorte und des oder der Transportzielorte benötigten Energiemenge und/oder einer jeweils verbleibenden Restenergiemenge der Transportmittel ausgewählt werden.

4. Verfahren nach einem der vorhergehenden Ansprüche, **dadurch gekennzeichnet, dass** bei dem Auswählen der Transportmittel zusätzlich eine Entfernung des oder der Transportzielorte von einer Wartungs- und/oder Ladeeinrichtung für die Transportmittel berücksichtigt wird.

5. Verfahren nach einem der vorhergehenden Ansprüche, **dadurch gekennzeichnet, dass** eine Ankunftszeit der ausgewählten Transportmittel an dem oder den Transportstartorten berechnet und angezeigt wird.

6. Verfahren nach einem der vorhergehenden Ansprüche, **dadurch gekennzeichnet, dass** vor dem Zuführen der ausgewählten Transportmittel zu dem oder den Transportstartorten eine Bestätigungsanfrage durchgeführt wird, wobei die Transportmittel bei auf die Bestätigungsanfrage folgender Bestätigung dem oder den Transportstartorten zugeführt werden und ansonsten die Transportmittelteilmenge aufgelöst wird.

7. Verfahren nach einem der vorhergehenden Ansprüche, **dadurch gekennzeichnet, dass** die in der Transportmittelteilmenge enthaltenen Transportmittel die Ladung gemeinsam aufnehmen und/oder anheben.

8. Verfahren nach einem der vorhergehenden Ansprüche, **dadurch gekennzeichnet, dass** die die Ladung gemeinsam aufnehmenden und/oder anhebenden Transportmittel zumindest während des Transports autonom einen zwischen ihnen vorliegenden Abstand konstant halten oder miteinander gekoppelt werden, insbesondere mechanisch, magnetisch und/oder pneumatisch.

9. Verfahren nach einem der vorhergehenden Ansprüche, **dadurch gekennzeichnet, dass** die in der Transportmittelteilmenge enthaltenen Transportmittel nach dem Transport einzeln und unabhängig voneinander an wenigstens einen weiteren Transportstartort verlagert werden.

10. Transportsystem, insbesondere zur Durchführung des Verfahrens nach einem oder mehreren der vorhergehenden Ansprüche, wobei das Transportsystem eine in einer Transportmittelgesamtmenge zusammengefasste Vielzahl von unabhängig voneinander bewegbaren, insbesondere emissionslosen Transportmitteln aufweist und dazu ausgebildet ist, bei Auftreten einer Transportmittelanforderung an einer Zentralsteuereinheit von dieser in Abhängigkeit von einer zu transportierenden Ladung eine zum Durchführen des Transports hinreichende Transportmittelanzahl sowie ein oder mehrere dazugehörige Transportstartorte zu ermitteln und aus der Transportmittelgesamtmenge eine der Transportmittelanzahl entsprechende Anzahl an Transportmitteln auszuwählen, einer Transportmittelteilmenge zuzuordnen und autonom dem oder den Transportstartorten zuzuführen, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird.

## Geänderte Patentansprüche

### Geänderte Patentansprüche gemäss Regel 137(2) EPÜ.

1. Verfahren zum Betreiben eines Transportsystems, das eine in einer Transportmittelgesamtmenge zusammengefasste Vielzahl von unabhängig voneinander bewegbaren, insbesondere emissionslosen Transportmitteln aufweist und bei Auftreten einer Transportmittelanforderung an einer Zentralsteuereinheit von dieser in Abhängigkeit von einer zu transportierenden Ladung eine zum Durchführen des Transports hinreichende Transportmittelanzahl sowie ein oder mehrere dazugehörige Transportstartorte ermittelt werden und aus der Transportmittelgesamtmenge eine der Transportmittelanzahl entsprechende Anzahl an Transportmitteln ausgewählt, einer Transportmittelteilmenge zugeordnet und autonom dem oder den Transportstartorten zugeführt wird, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird, **dadurch gekennzeichnet, dass** wenigstens eines der Transportmittel vor dem Zuführen zu dem entsprechenden Transportstartort mit einem Transportmittelaufsatz versehen wird, der aus einer Vielzahl von unterschiedlichen Transportmittelaufsätzen ausgewählt wird.

2. Verfahren nach Anspruch 1, **dadurch gekennzeichnet, dass** die Transportmittelanforderung die zu transportierende Ladung, den oder die Transportstartorte sowie den oder die Transportzielorte spezifiziert.

3. Verfahren nach einem der vorhergehenden Ansprüche, **dadurch gekennzeichnet, dass** die Transportmittel für die Transportmittelteilmenge anhand einer zum Erreichen des oder der Transportstartorte und des oder der Transportzielorte benötigten Energiemenge und/oder einer jeweils verbleibenden Restenergiemenge der Transportmittel ausgewählt werden.

4. Verfahren nach einem der vorhergehenden Ansprüche, **dadurch gekennzeichnet, dass** bei dem Auswählen der Transportmittel zusätzlich eine Entfernung des oder der Transportzielorte von einer Wartungs- und/oder Ladeeinrichtung für die Transportmittel berücksichtigt wird.

5. Verfahren nach einem der vorhergehenden Ansprüche, **dadurch gekennzeichnet, dass** eine Ankunftszeit der ausgewählten Transportmittel an dem oder den Transportstartorten berechnet und angezeigt wird.

6. Verfahren nach einem der vorhergehenden Ansprüche, **dadurch gekennzeichnet, dass** vor dem Zuführen der ausgewählten Transportmittel zu dem oder den Transportstartorten eine Bestätigungsanfrage durchgeführt wird, wobei die Transportmittel bei auf die Bestätigungsanfrage folgender Bestätigung dem oder den Transportstartorten zugeführt werden und ansonsten die Transportmittelteilmenge aufgelöst wird.

7. Verfahren nach einem der vorhergehenden Ansprüche, **dadurch gekennzeichnet, dass** die in der Transportmittelteilmenge enthaltenen Transportmittel die Ladung gemeinsam aufnehmen und/oder anheben.

8. Verfahren nach einem der vorhergehenden Ansprüche, **dadurch gekennzeichnet, dass** die die Ladung gemeinsam aufnehmenden und/oder anhebenden Transportmittel zumindest während des Transports autonom einen zwischen ihnen vorliegenden Abstand konstant halten oder miteinander gekoppelt werden, insbesondere mechanisch, magnetisch und/oder pneumatisch.

9. Verfahren nach einem der vorhergehenden Ansprüche, **dadurch gekennzeichnet, dass** die in der Transportmittelteilmenge enthaltenen Transportmittel nach dem Transport einzeln und unabhängig voneinander an wenigstens einen weiteren Transportstartort verlagert werden.

10. Transportsystem, insbesondere zur Durchführung des Verfahrens nach einem oder mehreren der vorhergehenden Ansprüche, wobei das Transportsystem eine in einer Transportmittelgesamtmenge zusammengefasste Vielzahl von unabhängig voneinander bewegbaren, insbesondere emissionslosen Transportmitteln aufweist und dazu ausgebildet ist, bei Auftreten einer Transportmittelanforderung an einer Zentralsteuereinheit von dieser in Abhängigkeit von einer zu transportierenden Ladung eine zum Durchführen des Transports hinreichende Transportmittelanzahl sowie ein oder mehrere dazugehörige Transportstartorte zu ermitteln und aus der Transportmittelgesamtmenge eine der Transportmittelanzahl entsprechende Anzahl an Transportmitteln auszuwählen, einer Transportmittelteilmenge zuzuordnen und autonom dem oder den Transportstartorten zuzuführen, wobei nach dem Erreichen des Transportstartorts oder der Transportstartorte der Transport der Ladung zu einem oder mehreren Transportzielorten durchgeführt und nach dem Erreichen des Transportzielorts oder der Transportzielorte durch das oder die Transportmittel die Transportmittelteilmenge aufgelöst wird, **dadurch gekennzeichnet, dass** wenigstens eines der Transportmittel vor dem Zuführen zu dem entsprechenden Transportstartort mit einem Transportmittelaufsatz versehen wird, der aus einer Vielzahl von unterschiedlichen Transportmittelaufsätzen ausgewählt wird.
